# EUROPEAN PATENT APPLICATION

(11) **EP 3 778 192 A1**
(43) Date of publication of application: **17.02.2021**
(21) Application number: 18912245.0
(22) Date of filing: 30.03.2018
(51) Int. Cl.: B29C 64/209, B29C 64/343, B33Y 30/00

(54) **MATERIAL SUPPLY DEVICE, METHOD FOR CONTROLLING MATERIAL SUPPLY DEVICE, AND PROGRAM FOR CONTROLLING MATERIAL SUPPLY DEVICE**

(71) Applicant: Cmet Inc., Yokohama-shi, Kanagawa 222-0033 (JP); Technology Research Association For Future Additive Manufacturing, Chuo-ku, Tokyo 103-0027 (JP)
(72) Inventor: MIYANO Hideaki, Yokohama-shi, Kanagawa 222-0033 (JP); OOBA Yoshikazu, Yokohama-shi, Kanagawa 222-0033 (JP); SUZUKI Koukichi, Yokohama-shi, Kanagawa 222-0033 (JP); SUWA Mitsunori, Yokohama-shi, Kanagawa 222-0033 (JP)
(74) Representative: TBK
(86) International application number: PCT/JP2018/013885
(87) International publication number: WO 2019/187110

(57) **Abstract**

A material supply amount is controlled accurately. A material supply apparatus includes a hopper that stores a material used for shaping a three-dimensional laminating and shaping object, a columnar recoater having a rotational shaft, and a driver that rotates the columnar recoater while moving the columnar recoater in a horizontal direction perpendicular to the rotational shaft. The recoater has a plurality of grooves in a direction along the rotational shaft that are formed on an outer circumferential surface, and temporarily store the material supplied from the hopper.

## Description

### TECHNICAL FIELD

The present invention relates to a material supply apparatus, a method for controlling the material supply apparatus, and a program for controlling the material supply apparatus.

### BACKGROUND ART

In the above technical field, patent literature 1 discloses a technique that forms discontinuous through holes having breaks between the holes as material supply paths in a recoating shaft, and supplies a recoating material from these material supply paths.

### CITATION LIST

### PATENT LITERATURE

Patent literature 1: WO2016/135974

### SUMMARY OF THE INVENTION

### TECHNICAL PROBLEM

In the technique described in the above literature, however, an amount of the recoating material cannot accurately be controlled.

The present invention provides a technique of solving the above-described problem.

### SOLUTION TO PROBLEM

One example aspect of the present invention provides a material supply apparatus comprising:
a hopper that stores a material used for shaping a three-dimensional laminating and shaping object;
a columnar recoater having a rotational shaft; and
a driver that rotates said columnar recoater while moving said columnar recoater in a horizontal direction perpendicular to the rotational shaft,
wherein said columnar recoater has a plurality of grooves in a direction along the rotational shaft that are formed on an outer circumferential surface of said columnar recoater and temporarily store the material supplied from said hopper.

Another example aspect of the present invention provides a method of controlling a material supply apparatus, the material supply apparatus including
a hopper that stores a material used for shaping a three-dimensional laminating and shaping object,
a columnar recoater having a rotational shaft, and
a driver that rotates the columnar recoater while moving the columnar recoater in a horizontal direction perpendicular to the rotational shaft,
wherein the columnar recoater has a plurality of grooves in a direction along the rotational shaft that are formed on an outer circumferential surface of the columnar recoater, and temporarily store the material supplied from the hopper,
the method comprising:
   storing a recoating pattern table that associates a recoating amount of the material to be supplied by the columnar recoater with parameters for setting arrangement structure and an operation of the columnar recoater; and
   controlling the operation of the columnar recoater by referring to the recoating pattern table, when the structure of the columnar recoater and the recoating amount are input.

Still other example aspect of the present invention provides a computer program for causing a computer to execute a method of controlling a material supply apparatus, the material supply apparatus including
a hopper that stores a material used for shaping a three-dimensional laminating and shaping object,
a columnar recoater having a rotational shaft, and
a driver that rotates the columnar recoater while moving the columnar recoater in a horizontal direction perpendicular to the rotational shaft,
wherein the columnar recoater has a plurality of grooves in a direction along the rotational shaft that are formed on an outer circumferential surface of the columnar recoater, and temporarily store the material supplied from the hopper,
the method comprising:
storing a recoating pattern table that associates a recoating amount of the material to be supplied by the columnar recoater with parameters for setting arrangement structure and an operation of the columnar recoater; and
controlling the operation of the columnar recoater by referring to the recoating pattern table, when the structure of the columnar recoater and the recoating amount are input.

### ADVANTAGEOUS EFFECTS OF INVENTION

According to the present invention, the amount of the recoating material can accurately be controlled.

### BRIEF DESCRIPTION OF DRAWINGS

Fig. 1 is a block diagram showing the arrangement of a material supply apparatus according to the first example embodiment of the present invention;
Fig. 2A is a view showing the arrangement of a material supply apparatus according to the second example embodiment of the present invention;
Fig. 2B is a perspective view for explaining the structure of a recoater of the material supply apparatus according to the second example embodiment of the present invention;
Fig. 2C is a top view for explaining the structure of the recoater of the material supply apparatus according to the second example embodiment of the present invention;
Fig. 2D is a sectional view for explaining a shape of grooves formed on the recoater of the material supply apparatus according to the second example embodiment of the present invention;
Fig. 3 is a view showing an example of a recoating pattern table of the material supply apparatus according to the second example embodiment of the present invention;
Fig. 4 is a view for explaining the hardware configuration of the material supply apparatus according to the second example embodiment of the present invention;
Fig. 5 is a flowchart for explaining the procedure of the material supply apparatus according to the second example embodiment of the present invention;
Fig. 6 is a view for explaining the arrangement of a material supply apparatus according to the third example embodiment of the present invention;
Fig. 7 is a sectional view for explaining a shape of grooves formed on a recoater of a material supply apparatus according to the fourth example embodiment of the present invention;
Fig. 8 is a sectional view for explaining a shape of grooves formed on a recoater of a material supply apparatus according to the fifth example embodiment of the present invention;
Fig. 9 is a sectional view for explaining a shape of grooves formed on a recoater of a material supply apparatus according to the sixth example embodiment of the present invention;
Fig. 10 is a sectional view for explaining a shape of grooves formed on a recoater of a material supply apparatus according to the seventh example embodiment of the present invention;
Fig. 11A is a sectional view for explaining an example of a shape of grooves formed on a recoater of a material supply apparatus according to the eighth example embodiment of the present invention;
Fig. 11B is a sectional view for explaining another example of a shape of grooves formed on the recoater of the material supply apparatus according to the eighth example embodiment of the present invention;
Fig. 12 is a sectional view for explaining a shape of grooves formed on a recoater of a material supply apparatus according to the ninth example embodiment of the present invention; and
Fig. 13 is a view for explaining the arrangement of a material supply apparatus according to the 10th example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

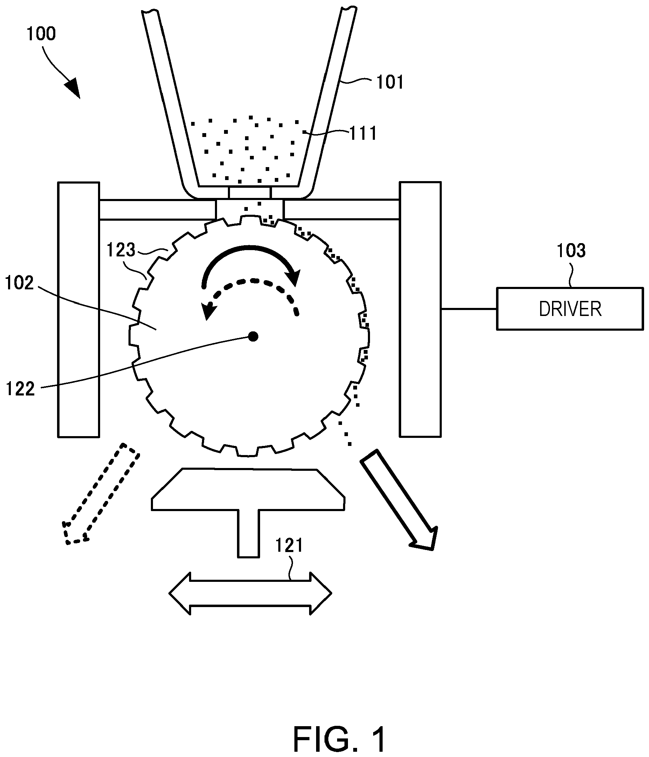

A material supply apparatus 100 as the first example embodiment of the present invention will be explained with reference to Fig. 1. The material supply apparatus 100 is an apparatus that is used in a three-dimensional laminating and shaping apparatus or the like, and supplies the material used for shaping a three-dimensional laminating and shaping object onto a shaping table or a shaping surface of the object.

As shown in Fig. 1, the material supply apparatus 100 comprises a hopper 101, a columnar recoater 102 and a driver 103.

The hopper 101 stores a material 111 used for shaping a three-dimensional laminating and shaping object. The columnar recoater 102 has a rotational shaft 122 the recoater 102. The driver 103 rotates the columnar recoater 102 while moving the recoater 102 in a horizontal direction perpendicular to the rotational shaft 122.

The columnar recoater 102 has a plurality of grooves 123 on the outer circumferential surface of the columnar recoater 102. The grooves 123 are formed in a direction along the rotational shaft 122 and temporarily store the material 111 supplied from the hopper 101.

According to this example embodiment, the amount of the recoating material can accurately be controlled.

### [Second Example Embodiment]

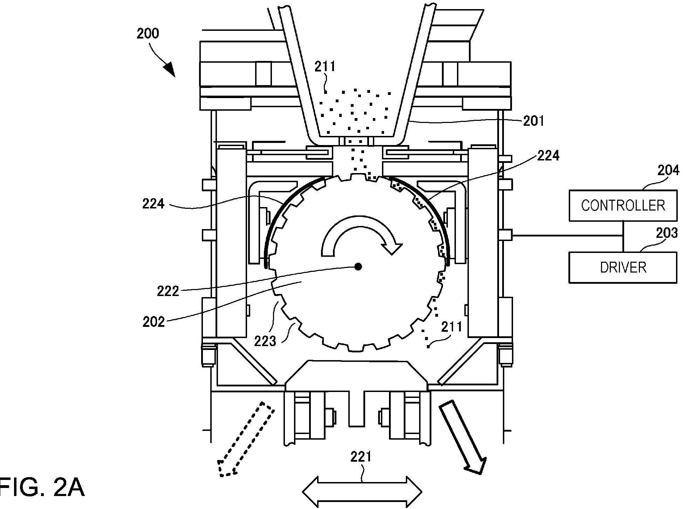

A material supply apparatus 200 according to the second example embodiment of the present invention will be explained below with reference to Figs. 2A to 5. Fig. 2A is a view showing the arrangement of the material supply apparatus 200 according to this example embodiment. The material supply apparatus 200 includes a hopper 201, a recoater 202, a driver 203, and a controller 204. Note that the material supply apparatus 200 is an apparatus that is attached to a three-dimensional laminating and shaping apparatus for shaping a three-dimensional laminating and shaping object, and supplies the material used for shaping the three-dimensional laminating and shaping object onto a shaping table or a shaping surface of the object. Note also that the three-dimensional laminating and shaping object to be shaped is a sand mold, but the three-dimensional laminating and shaping object to be shaped is not limited to the sand.

The hopper 201 temporarily stores a material 211 used for shaping the three-dimensional laminating and shaping object. The hopper 201 supplies the stored material to the recoater 202. The material 211 used for shaping the three-dimensional laminating and shaping object is sand, but is not limited to the sand. The material 211 may also be a powder of a metal such as aluminum, iron, or copper, a plastic powder, or a resin powder.

The recoater 202 is located and installed below the hopper 201. Also, an outer circumferential surface of the recoater 202 is formed on a bottom surface side of the hopper 201. The recoater 202 recoats with the material 211 supplied from the hopper 202 onto a shaping table or a shaping surface of the object. In addition, the recoater 202 temporarily stores the material 211 supplied from the hopper 201.

The recoater 202 is a columnar member. More specifically, the recoater 202 is a round columnar member. Note that the recoater 202 can also be a polygonal columnar member. The recoater 202 (in the material supply apparatus 200) supplies the material 211 for recoating while the material supply apparatus 200 moving in moving directions 221 indicated by arrows shown in Fig. 2A (in the left-and-right directions in Fig. 2A). The recoater 202 rotates around a rotational shaft (a central shaft) 222 perpendicular to the moving directions 221. The recoater 202 as a round columnar member has grooves 223 formed on the outer circumferential surface along the rotational shaft 222 (in a direction parallel to the rotational shaft 222). The material 211 supplied from the hopper 201 to the recoater 202 is supplied to and accommodated in the grooves 223 of the recoater 202. The grooves 223 temporarily store the material 211 supplied from the recoater 202. The grooves 223 accommodate the material 211. That is, subdivided materials from the material 211, each equivalent to the volume of each of the grooves 223, is filled in each of the grooves 223. Note that it is also possible to provide an air cleaner, a brush, or the like for removing, for example, dirt in the grooves 223 and the material 211 stuck in the grooves 223. The plurality of grooves 223 can be cleaned either at once or one after another, but the method for cleaning the grooves 223 is not limited to these above mentioned methods.

The driver 203 rotates the recoater 202 while moving the material supply apparatus 200 including the recoater 202, horizontally and in a direction perpendicular to the rotational shaft 222. The driver 203 rotates the recoater 202 clockwise and counterclockwise. That is, the material 211 can be recoated onto the shaping surface in the traveling direction of the recoater 202 by rotating the recoater 202 clockwise or counterclockwise in accordance with one of the moving directions 221 of the recoater 202. For example, when the material supply apparatus 200 moves to the right in Fig. 2A, the driver 203 rotates the recoater 202 clockwise. Also, when the material supply apparatus 200 moves to the left in Fig. 2A, the driver 203 rotates the recoater 202 counterclockwise. Note that the relationship between the moving direction 221 of the material supply apparatus 200 and the rotating direction of the recoater 202 is not limited to the relationship described above, and can be opposite to this relationship.

Also, fall prevention members 224 are attached in the material supply apparatus 200. The fall prevention members 224 prevent the material 211 filled in the grooves 223 from spilling down when the recoater 202 rotates. The fall prevention members 224 cover left and right quarter circular portions in the upper half of the recoater 202 as the round columnar member. Note that the fall prevention members 224 do not cover the recoater 202 in a portion where the hopper 201 and the recorder 202 are close to or in contact with each other. This is so because if the fall prevention members 224 exist in the portion, the supply of the material 211 from the hopper 201 is hindered.

The fall prevention member 224 is a soft member made of, for example, felt, urethane, or cloth, but is not limited to these mentioned materials. Since the fall prevention member 224 is a soft member, it is possible to prevent deformation of the shape of the material 211 and a change in properties of the material 211 caused by friction between the fall prevention member 224 and the material 211 accommodated in the rotating grooves 223.

Furthermore, when the recoater 202 is arranged in a position where the recoater 202 is in contact with the bottom surface of the hopper 201, the rotational vibration of the recoater 202 is transmitted to the hopper 201. This phenomenon promotes discharge of the material 211 from a discharge port in the bottom surface of the hopper 201.

The controller 204 controls the recoating amount of the material 211 by controlling the rotation of the recoater 202 by the driver 203. For example, the controller 204 controls the recoating amount of the material 211 by the recoater 202 by referring to a table, which stores the recoating amount of the material 211 to be supplied by the recoater 202 and parameters as data set for relating the structure and the operation of the recoater 202, in association with each other. The controller 204 controls the recoating amount of the material 211 so that a thickness of one material layer is, for example, 0.28 mm. However, the thickness of one material layer is not limited to 0.28 mm, and is determined by taking various conditions and the like into consideration. Note that the method of controlling the recoating amount of the material 211 by the controller 204 is not limited to the above mentioned method.

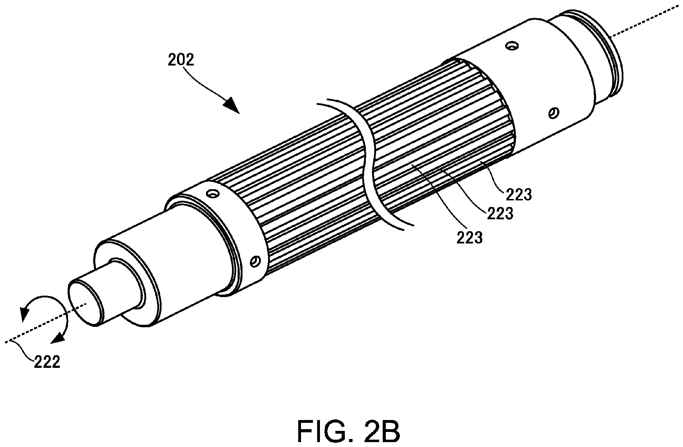

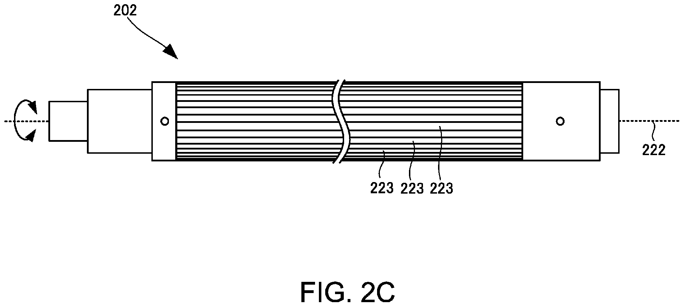

Fig. 2B is a perspective view for explaining the structure of the recoater 202 in the material supply apparatus 200 according to this example embodiment. Fig. 2C is a top view for explaining the structure of the recoater 202 in the material supply apparatus 200 according to this example embodiment.

As shown in Figs. 2B and 2C, the recoater 202 is a member (a round columnar member or a rod-like member) having a long round columnar shape (a long rod-like shape), and has, for example, a total length of about 1.8 mm. Note that the total length of the recoater 202 is not limited to the above length. The total length of the recoater 202 can also be, for example, a length matching the shaping size of a three-dimensional laminating and shaping apparatus to which the material supply apparatus 200 is attached. Also, the diameter of the recoater 202 is, for example, 35 mm, but the diameter of the recoater 202 is not limited to this diameter value.

The plurality of grooves 223 are carved on the outer circumferential surface of the recoater 202 in a direction along the rotational shaft 222 (in a direction parallel to the rotational shaft 222). That is, the plurality of continuous grooves 223 having no breaks in a direction along the rotational shaft 222 are formed on the entire outer circumferential surface of the recoater 202. The recoater 202 is a rod-like (shaft-like) member with the grooves 223, on the outer circumferential surface of which the grooves 223 are formed. That is, the recoater 202 has a shape (gear-like shape) having projections and recesses on the surface (outer circumferential surface) of a round columnar member (shaft). The recoater 202 rotates clockwise and counterclockwise around the rotational shaft 222. Since the grooves 223 have no breaks, the amount of the material 211 accommodated in the grooves 223 is uniform in the entire region of 1.8 mm length. Note that if a plurality of recoaters respectively including grooves 223 having various sizes and shapes are prepared, the plurality of the recoaters can be exchanged to be used in accordance with, for example, the shaping conditions of a three-dimensional laminating and shaping object.

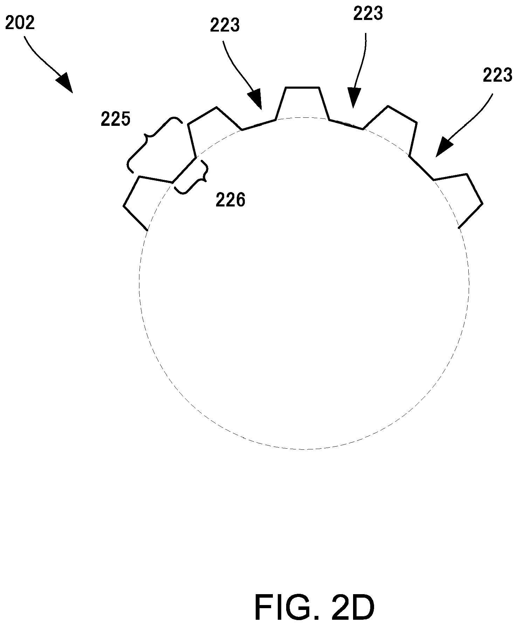

Fig. 2D is a sectional view for explaining a shape of the grooves 223 formed on the recoater 202 of the material supply apparatus 200 according to this example embodiment. Fig. 2D is a sectional view of the recoater 202 taken along or cut in a plane perpendicular to the rotational shaft 222 of the recoater 202. Fig. 2D shows some of the grooves 223 formed on the recoater 202, and depicts a sectional shape of the grooves 223. A width of an opening 225 of each of the grooves 223 is larger than a width of a bottom 226 of each of the grooves 223. A sectional shape of each of the grooves 223 is a trapezoidal shape. The plurality of grooves 223 have equal volumes.

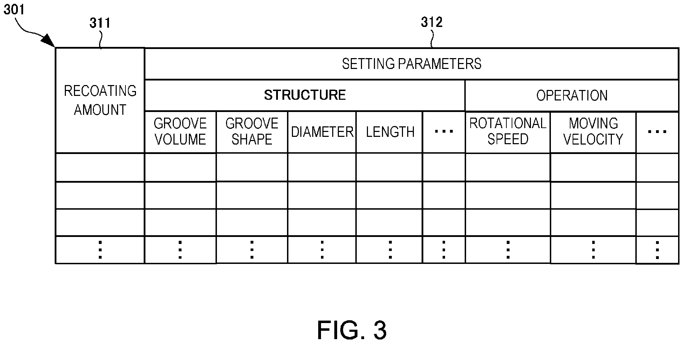

Fig. 3 is a view showing an example of a recoating pattern table 301 of the material supply apparatus 200 according to this example embodiment. The recoating pattern table 301 stores a recoating amount 311 and setting parameters 312 in association with each other. The recoating amount 311 is an amount of recoating the material 211 onto the shaping surface. The setting parameters 312 include parameters representing the structure of the recoater 202 and parameters representing the operation of the recoater 202. The structure includes a volume of the grooves 223 or a groove of the recoater 202, a shape of the groove, diameter and length of the recoater 202, and the like (a number of grooves). The operation includes rotational speed and moving velocity of the recoater 202, and the like. The rotational speed is defined by, for example, the number of rotations per unit time (rpm) of the recoater 202, but the definition of the rotational speed is not limited to this definition. Note that the rotational speed (the number of rotations) of the recoater 202 is around 500 rpm, for example, 450 to 550 rpm, but is not limited to this rotational speed.

The controller 204 controls the recoating amount of the material 211 by controlling the recoater 202 by, for example, referring to the recoating pattern table 301. For example, the recoating amount of the material 211 increases as the rotational speed of the recoater 202 is increased, and decreases as the rotational speed of the recoater 202 is decreased. Therefore, when the moving velocity of the recoater 202 or the velocity (the recoating velocity) at which the recoater 202 moves on the shaping table or the shaping surface is high, the recoating amount of the material 211 can be increased by increasing the rotation speed of the recoater 202. By performing this control, the material 211 can rapidly be recoated onto the shaping surface within a short time.

When the moving velocity of the recoater 202 is low, the recoating amount of the material 211 can be reduced by decreasing the rotational speed of the recoater 202. By performing this control, the material 211 can reliably be recoated on the shaping surface, although the recoating time of the material 211 increases. As described above, the controller 204 can freely adjust the recoating amount of the material 211.

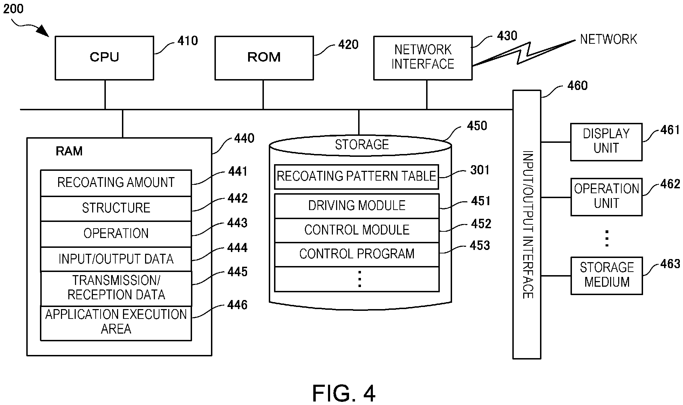

Fig. 4 is a view for explaining the hardware configuration of the material supply apparatus 200 according to this example embodiment. A CPU (Central Processing Unit) 410 is a processor for arithmetic control, and implements the functional constituting units of the material supply apparatus 200 shown in Fig. 2A by executing programs. A ROM (Read Only Memory) 420 stores fixed data such as initial data and programs, and other programs. A network interface 430 communicates with another apparatus across a network. Note that the CPU 410 is not limited to one CPU and may also be a plurality of CPUs or include a GPU (Graphics Processing Unit) for image processing. Also, the network interface 430 desirably has a CPU independent of the CPU 410, and writes or reads out transmission/reception data in or from an area of a RAM (Random Access Memory) 440. It is also desirable to install a DMAC (Direct Memory Access Controller) (not shown) for transferring data between the RAM 440 and a storage 450. Furthermore, an input/output interface 460 desirably has a CPU independent of the CPU 410, and writes or reads out input/output data in or from an area of the RAM 440. Accordingly, the CPU 410 recognizes that data is received by or transferred to the RAM 440, and processes the data. Also, the CPU 410 prepares the processing result in the RAM 440, and causes the network interface 430, the DMAC, or the input/output interface 460 to perform later transmission or transfer.

The RAM 440 is a random access memory to be used as a temporary storage work area by the CPU 410. In the RAM 440, an area for storing data necessary to implement this example embodiment is secured. The recoating amount 441 is the amount of the material 211 to be supplied for recoating. The structure 442 is data such as the diameter and length of the recoater 202, the volume of the groove 223, and the shape of the groove 223. The operation 443 includes the rotational speed and moving velocity of the recoater 202, and the like. These data are read out from, for example, the recoating pattern table 301.

Input/output data 444 is input and output via the input/output interface 460. Transmission/reception data 445 is transmitted and received via the network interface 430. The RAM 440 has an application execution area 446 for executing various application modules.

The storage 450 stores a database, various parameters, or data or programs (to be described later) necessary to implement this example embodiment. The storage 450 stores the recoating pattern table 301. The recoating pattern table 301 is a table for managing the relationship between the recoating amount and the setting parameters shown in Fig. 3. The storage 450 further stores a driving module 451 and a control module 452.

The driving module 451 is a module for rotating the recoater 202 while moving the recoater 202 horizontally and in a direction perpendicular to the rotational shaft 222. The control module 452 is a module for controlling the recoating amount of the material 211 to be supplied by the recoater 202. The CPU 410 reads out the modules 451 and 452 to the application execution area 446 of the RAM 440 and executes them. A control program 453 is a program for controlling the whole material supply apparatus 200.

The input/output interface 460 interfaces input/output data with respect to an input/output device. A display unit 461 and an operation unit 462 are connected to the input/output interface 460. A storage medium 463 can further be connected to the input/output interface 460. Note that the RAM 440 and the storage 450 shown in Fig. 4 do not depict programs and data related to general-purpose functions and other implementable functions of the material supply apparatus 200.

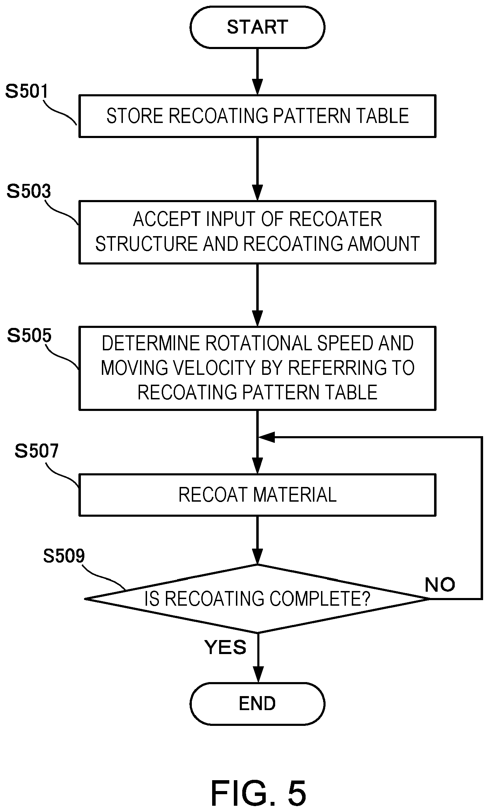

Fig. 5 is a flowchart for explaining the procedure of the material supply apparatus 200 according to this example embodiment. The CPU 410 executes this flowchart by using the RAM 440, and implements the functional constituting units of the material supply apparatus 200 shown in Fig. 2A. In step S501, the material supply apparatus 200 stores the recoating pattern table 301. In step S503, the material supply apparatus 200 accepts input of the structure of the recoater 202 and the recoating amount of the material 211 from the user. In step S505, the material supply apparatus 200 determines the rotational speed of the recoater 202 and the moving velocity of the recoater 202 (or the material supply apparatus 200) by referring to the recoating pattern table 301. In step S507, the material supply apparatus 200 recoats the material 211 onto the shaping surface at the determined rotational speed and moving velocity. In step S509, the material supply apparatus 200 determines whether the recoating of the material 211 is complete. If the recoating of the material is not complete (NO in step S509), the material supply apparatus 200 returns to step S507, and continues the recoating of the material 211. If the recoating of the material is complete (YES in step S509), the material supply apparatus 200 terminates the process.

According to this example embodiment, the material recoating amount can accurately be controlled. Also, a predetermined amount of the material can be recoated by controlling the rotating speed of the recoater because the volumes of the grooves formed on the recoater are equal. In addition, since the predetermined amount of the material can be recoated, the amount of the material to be discarded (discarded sand) can be reduced. Since the predetermined amount of the material can be recoated, the material can flatly be spread (scattered) on the shaping surface. Furthermore, the recoating amount of the material can be adjusted by adjusting the rotational speed and moving velocity of the recoater.

### [Third Example Embodiment]

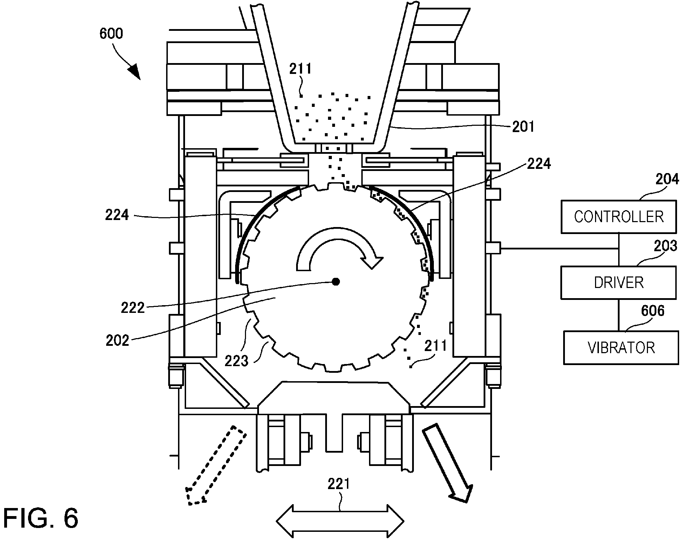

A material supply apparatus according to the third example embodiment of the present invention will be explained below with reference to Fig. 6. Fig. 6 is a view or explaining the arrangement of the material supply apparatus according to this example embodiment. The difference of the material supply apparatus according to this example embodiment from the abovementioned second example embodiment is that the apparatus further includes a vibrator. Other parts and operations are the same as the second example embodiment, so the same reference numerals denote the same parts and operations, and detailed explanations thereof will be omitted.

A material supply apparatus 600 further includes a vibrator 606. The vibrator 606 vibrates a recoater 202. A material 211 accommodated in the grooves 223 of the recoater 202 is recoated onto a shaping table and a shaping surface by free fall, when no vibrating the recoater 202. However, the free-fall recoating state of the material 211 can change due to the state (for example, the humidity, the grain shape, or the grain size) of the material 211. If the recoating state of the material 211 has changed, the material 211 accommodated in the grooves 223 cannot reliably be discharged from the grooves 223 by the free fall of the material 211 in some cases. In this case, it is possible to reliably discharge the material 211 accommodated in the grooves 223 by vibrating the recoater 202 by the vibrator 606. Since the material 211 can reliably be discharged, the recoating of the material 211 can further be promoted smoothly.

The material supply apparatus 600 can also include a vibrator for vibrating a hopper 201. The use of the vibrator for vibrating the hopper 201 can promote the supply of the material 211 from the hopper 201 to the recoater 202. That is, the supply of the material 211 from the hopper 201 to the recoater 202 is performed by the free fall of the material 201 when no vibrating the hopper 201, but the supply state of the material 201 can change due to, for example, the state (for example, the humidity, the grain shape, or the grain size) of the material 211. If the supply state of the material 211 has changed, it is sometimes impossible to supply a predetermined amount of the material 211 by the free fall of the material 211. In this case, the supply of the material 211 can be promoted by vibrating the hopper 201 by the vibrator.

According to this example embodiment, the supply of the material and recoating by the material can be performed more reliably because the hopper vibrator and/or the recoater vibrator are installed. Also, even when the supply of the material and/or recoating by the material stagnate, the stagnation of the supply of the material and/or recoating by the material can reliably be eliminated by vibrating the hopper and/or the recoater by the vibrators.

### [Fourth Example Embodiment]

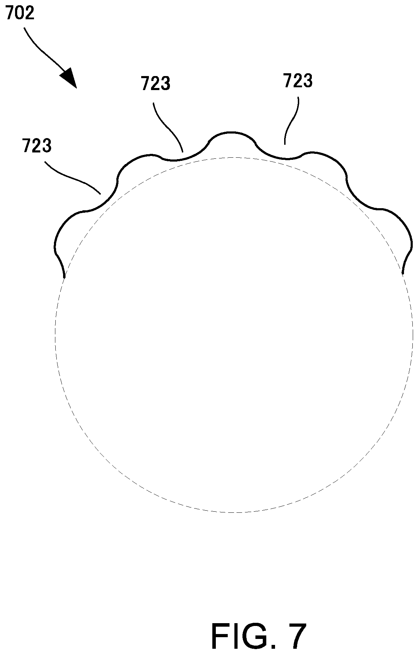

A recoater of a material supply apparatus according to the fourth example embodiment of the present invention will be explained below with reference to Fig. 7. Fig. 7 is a sectional view for explaining a shape of grooves 723 formed on a recoater 702 of the material supply apparatus according to this example embodiment. The difference of the recoater 702 of the material supply apparatus according to this example embodiment from the abovementioned second and third example embodiments is that the shape of the grooves 723 has a waveshape. Other parts and operations are the same as the second and third example embodiments, so the same reference numerals denote the same parts and operations, and detailed explanations thereof will be omitted.

Fig. 7 is a sectional view of the recoater 702 taken along a plane perpendicular to a rotational shaft 222. The grooves 723 of the recoater 702 have a waveshape. That is, the grooves 723 have a shape in which round peaks and round troughs alternately appear. A plurality of grooves 723 having this shape are formed on the recoater 702.

When the grooves 723 are formed into the waveshape, there is no corner. Therefore, a material 211 is neither stuck nor deposited in a corner. Consequently, the material 211 accommodated in the grooves 723 can reliably be discharged outside the grooves 723, and a predetermined amount of the material 211 can reliably be recoated on the shaping surface.

According to this example embodiment, the material is neither stuck nor deposited in a corner of the groove, so the recoating amount of the material can be controlled more accurately. In addition, since no material is stuck in the groove, the labor for maintenance such as cleaning of the grooves can be saved.

### [Fifth Example Embodiment]

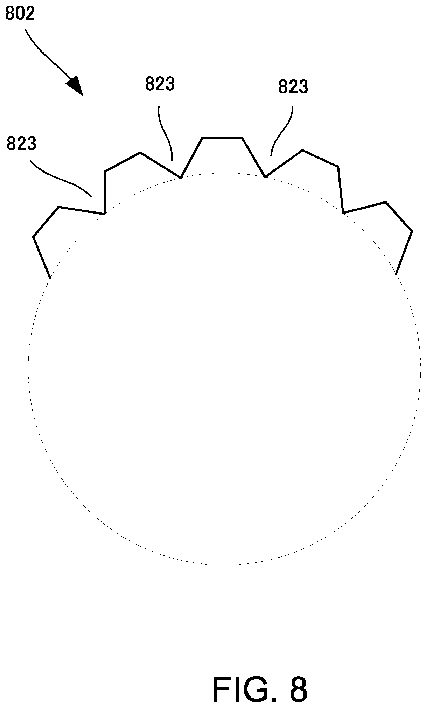

A recoater of a material supply apparatus according to the fifth example embodiment of the present invention will be explained below with reference to Fig. 8. Fig. 8 is a view for explaining a recoater 802 of the material supply apparatus according to this example embodiment. The difference of the recoater 802 of the material supply apparatus according to this example embodiment from the abovementioned second to fourth example embodiments is that a groove 823 has a triangular shape. Other parts and operations are the same as the second to fourth example embodiments, so the same reference numerals denote the same parts and operations, and detailed explanations thereof will be omitted.

Fig. 8 is a sectional view of the recoater 802 taken along a plane perpendicular to a rotational shaft 222. The groove 823 of the recoater 802 has a triangular shape. A plurality of grooves 823 having this shape are formed on the recoater 802.

When the shape of the groove 823 is a triangular shape, there is only one corner at the vertex of the triangle, so the amount of a material 211 stuck in the corner can be reduced. Also, since the corner is formed at only one vertex of the triangle, the material 211 accommodated in the groove 823 can be discharged from the groove 823 by free fall when the grooves 823 faces down. Note that a trapezoidal portion exists between the grooves 823 in this example embodiment, but it is also possible to remove this trapezoidal portion and form a shape in which the triangular grooves 823 continue.

According to this example embodiment, the shape of the groove is a triangular shape. Since corners in which the material is stuck are reduced, the recoating amount of the material can be controlled more accurately. In addition, since the groove shape is a triangular shape, that is, a simple shape, the grooves of the recoater can easily be processed.

### [Sixth Example Embodiment]

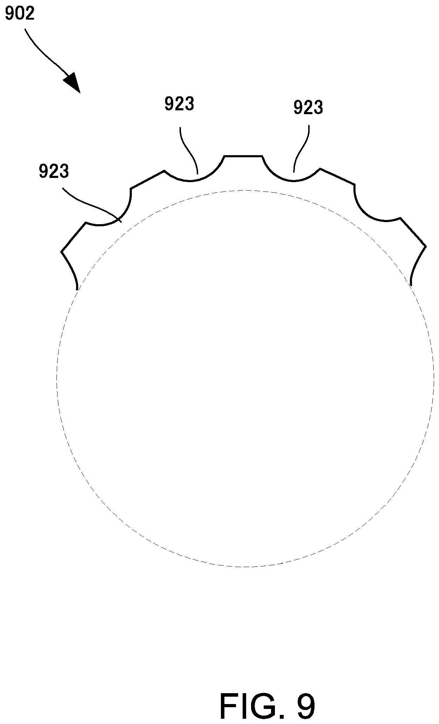

A recoater of a material supply apparatus according to the sixth example embodiment of the present invention will be explained below with reference to Fig. 9. Fig. 9 is a view for explaining a recoater 902 of the material supply apparatus according to this example embodiment. The difference of the recoater 902 of the material supply apparatus according to this example embodiment from the abovementioned second to fifth example embodiments is that a groove 923 has a semicircular shape. Other parts and operations are the same as the second to fifth example embodiments, so the same reference numerals denote the same parts and operations, and detailed explanations thereof will be omitted.

Fig. 9 is a sectional view of the recoater 902 taken along a plane perpendicular to a rotational shaft 222. The groove 923 of the recoater 902 has a semicircular shape. A plurality of grooves 923 having this shape are formed on the recoater 902.

When the shape of the groove 923 is a semicircular shape, no corner is formed, so a material 211 is not deposited by being stuck in a corner. Therefore, the material 211 accommodated in the groove 923 can reliably be discharged outside the groove 923, and the material 211 can reliably be recoated onto the shaping surface. Note that a trapezoidal portion exists between the grooves 923 in this example embodiment, but it is also possible to remove this trapezoidal portion and form a shape in which the semicircular grooves 923 continue.

According to this example embodiment, the material is neither stuck nor deposited in a corner of the groove, so the recoating amount of the material can be controlled more accurately. In addition, since the groove shape is a semicircular shape, that is, a simple shape, the grooves of the recoater can easily be processed.

### [Seventh Example Embodiment]

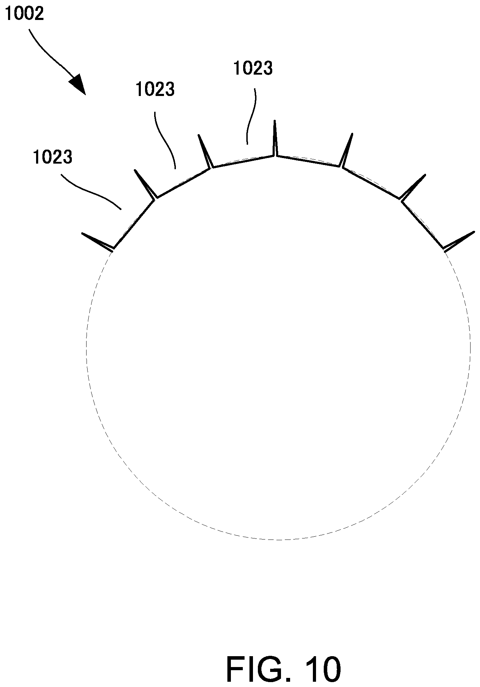

A recoater of a material supply apparatus according to the seventh example embodiment of the present invention will be explained below with reference to Fig. 10. Fig. 10 is a view for explaining a recoater 1002 of the material supply apparatus according to this example embodiment. The difference of the recoater 1002 of the material supply apparatus according to this example embodiment from the abovementioned second to sixth example embodiments is that a distance between trapezoidal grooves 1023 is narrow. Other parts and operations are the same as the second to sixth example embodiments, so the same reference numerals denote the same parts and operations, and detailed explanations thereof will be omitted.

Fig. 10 is a sectional view of the recoater 1002 taken along a plane perpendicular to a rotational shaft 222. The groove 1023 of the recoater 1002 has a trapezoidal shape in which a width of the opening of the groove 1023 is slightly larger than a width of the bottom portion of the groove 1023. A plurality of grooves 1023 having this shape are formed on the surface of the recoater 1002. On the recoater 1002, the distance between the grooves 1023 is narrow, and a member like a long and narrow triangular partition is formed between the grooves 1023.

According to this example embodiment, the volume of the groove increases. This makes it possible to increase the recoating amount of a material, and control the recoating amount of the material more accurately.

### [Eighth Example Embodiment]

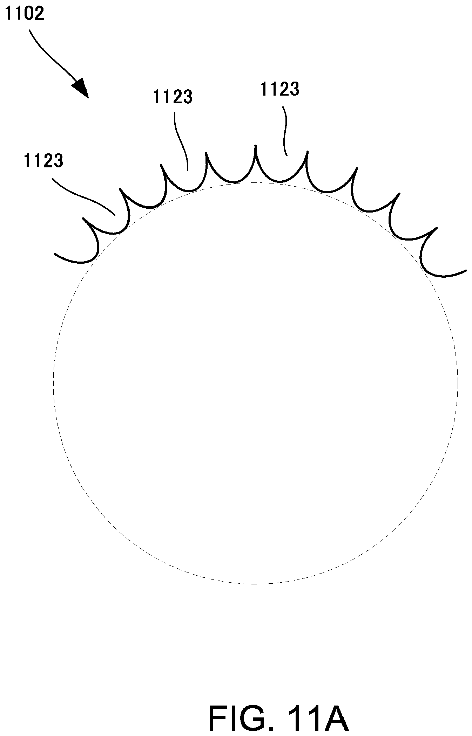

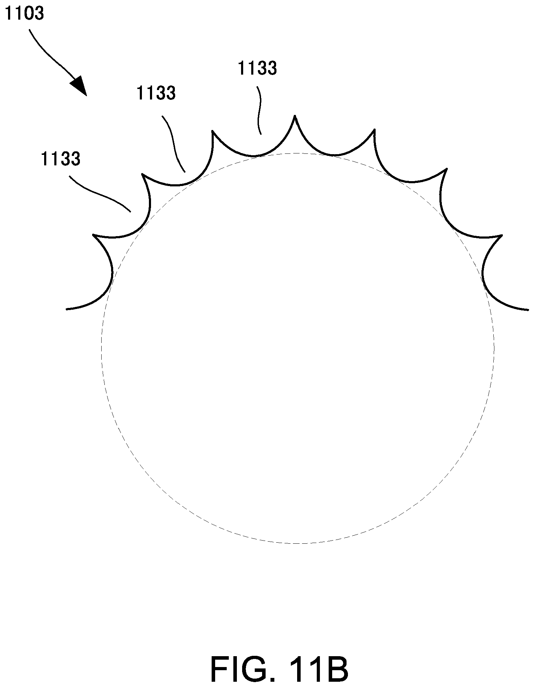

A recoater of a material supply apparatus according to the eighth example embodiment of the present invention will be explained below with reference to Figs. 11A and 11B. Fig. 11A is a sectional view for explaining an example of the shape of a groove 1123 of a recoater 1102 of the material supply apparatus according to this example embodiment. Fig. 11B is a sectional view for explaining another example of the shape of a groove 1133 of a recoater 1103 of the material supply apparatus according to this example embodiment. The difference of the recoaters 1102 and 1103 of the material supply apparatus according to this example embodiment from the abovementioned second to seventh example embodiments is that semicircular grooves continue on the surface of the recoaters 1102 and 1103. Other parts and operations are the same as the second to seventh example embodiments, so the same reference numerals denote the same parts and operations, and detailed explanations thereof will be omitted.

Figs. 11A and 11B are sectional views of the recoaters 1102 and 1103 taken along a plane perpendicular to a rotational shaft 222. As the grooves 1123 of the recoater 1102 and the grooves 1133 of the recoater 1103, a plurality of semicircular grooves 1123 and a plurality of semicircular grooves 1133 are continuously formed on the surface of the recoaters 1102 and 1103, respectively. A difference between the grooves 1123 and 1133 is a width of the openings and a width of the bottoms of the grooves 1123 and 1133. That is, the widths of the opening and bottom of the grooves 1133 are larger than the widths of the opening and bottom of the grooves 1123. In addition, a depth of the groove 1123 is deeper than a depth of the groove 1133. Note that the volumes of the grooves 1123 and 1133 can be the same or different each other.

According to this example embodiment, the sizes of the grooves are changed, so various amounts of a material 211 can be recoated on the shaping surface. Also, since the groove has no corner, the material is neither stuck nor deposited in a corner, so the recoating amount of the material can be controlled more accurately. In addition, since the groove shape is a semicircular shape, that is, a simple shape, the grooves of the recoater can easily be processed.

### [Ninth Example Embodiment]

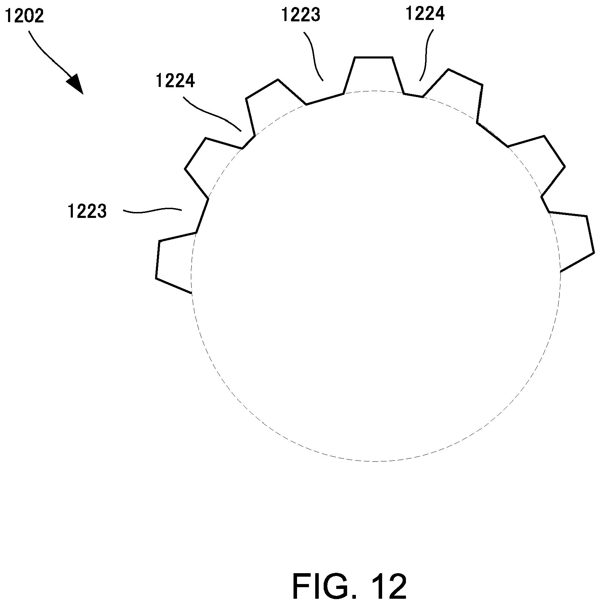

A material supply apparatus according to the ninth example embodiment of the present invention will be explained below with reference to Fig. 12. Fig. 12 is a view for explaining a recoater of the material supply apparatus according to this example embodiment. The difference of the recoater 1202 of the material supply apparatus according to this example embodiment from the abovementioned second to eighth example embodiments is that the sizes of a plurality of grooves on the surface of the recoater are different. Other parts and operations are the same as the second to eighth example embodiments, so the same reference numerals denote the same parts and operations, and detailed explanations thereof will be omitted.

Fig. 12 is a sectional view of the recoater 1202 taken along a plane perpendicular to a rotational shaft 222. On the recoater 1202, the sizes of a plurality of trapezoidal grooves 1223 and 1224 are different each other. That is, the volumes of the plurality of grooves 1223 and 1224 are different.

According to this example embodiment, a material can be supplied for recoating by various recoating amounts and various patterns. Also, the recoating amount of the material can be controlled more accurately.

### [10th Example Embodiment]

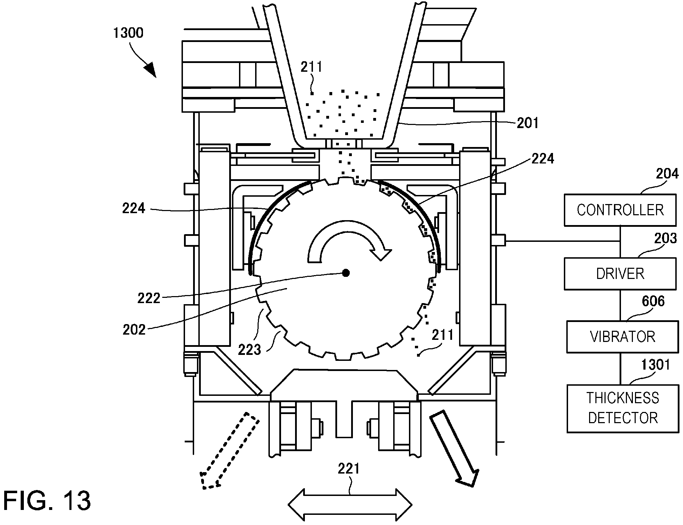

A material supply apparatus according to the 10th example embodiment of the present invention will be explained below with reference to Fig. 13. Fig. 13 is a view for explaining the material supply apparatus according to this example embodiment. The difference of the material supply apparatus according to this example embodiment from the abovementioned second to ninth example embodiments is that the apparatus includes a thickness detector. Other parts and operations are the same as the second to ninth example embodiments, so the same reference numerals denote the same parts and operations, and detailed explanations thereof will be omitted.

A material supply apparatus 1300 includes a thickness detector 1301. The thickness detector 1301 detects the thickness of the uppermost layer of a material 211recoated onto the shaping surface. The thickness detector 1301 is, for example, an infrared sensor or an ultrasonic sensor. The thickness detector 1301 emits infrared rays to the uppermost layer of the material 211 and a layer of the material 211 directly below the uppermost layer. Then, the thickness detector 1301 detects the thickness by, for example, the difference between times at which the emitted infrared rays return after being reflected by a given position of the material 211 on the uppermost layer of the material 211 and a layer of the material 211 directly below the uppermost layer. A controller 204 controls the rotational speed of a recoater 202 in accordance with the thickness detected by the thickness detector 1301.

According to this example embodiment, the thickness can be adjusted to a target thickness by controlling the recoating amount of the material in accordance with the detected thickness.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program, such as a radiation irradiation control program, for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. A material supply apparatus comprising:
a hopper that stores a material used for shaping a three-dimensional laminating and shaping object;
a columnar recoater having a rotational shaft; and
a driver that rotates said columnar recoater while moving said columnar recoater in a horizontal direction perpendicular to the rotational shaft,
wherein said columnar recoater has a plurality of grooves in a direction along the rotational shaft that are formed on an outer circumferential surface of said columnar recoater and temporarily store the material supplied from said hopper.

2. The material supply apparatus according to claim 1, wherein the plurality of grooves have equal volumes each other.

3. The material supply apparatus according to claim 1 or 2, wherein in a section of each of the plurality of grooves cut in a plane perpendicular to the rotational shaft, a width of an opening of the groove is larger than a width of a bottom of the groove.

4. The material supply apparatus according to claim 3, wherein a sectional shape of each of the plurality of grooves cut in the plane perpendicular to the rotational shaft is one of a trapezoid, a semicircle, and a triangle.

5. The material supply apparatus according to any one of claims 1 to 4, further comprising a vibrator that vibrates said columnar recoater.

6. The material supply apparatus according to any one of claims 1 to 5, further comprising:
a recoating pattern table that stores a scattering amount of the material to be scattered by said recoater and parameters for setting a structure and an operation of said recoater in association with each other; and
a controller that controls the operation of said columnar recoater by referring to the scattering pattern table, when the structure of said columnar recoater and the scattering amount are input.

7. The material supply apparatus according to claim 6, wherein the parameters include at least one of a rotational speed of said columnar recoater, a moving velocity of said columnar recoater, a volume of each of the plurality of grooves, a shape of each of the plurality of grooves, a diameter of a columnar member, and a length of the columnar member.

8. The material supply apparatus according to claim6 or 7, further comprising a thickness detector that detects a thickness of an uppermost layer of the material recoated by the columnar recoater,
wherein said controller controls the rotational speed of said columnar recoater in accordance with the thickness detected by said thickness detector.

9. A three-dimensional laminating and shaping apparatus comprising a material supply apparatus according to any one of claims 1 to 8.

10. A method of controlling a material supply apparatus, the material supply apparatus including
a hopper that stores a material used for shaping a three-dimensional laminating and shaping object,
a columnar recoater having a rotational shaft, and
a driver that rotates the columnar recoater while moving the columnar recoater in a horizontal direction perpendicular to the rotational shaft,
wherein the columnar recoater has a plurality of grooves in a direction along the rotational shaft that are formed on an outer circumferential surface of the columnar recoater, and temporarily store the material supplied from the hopper,
the method comprising:
storing a recoating pattern table that associates a recoating amount of the material to be supplied by the columnar recoater with parameters for setting arrangement structure and an operation of the columnar recoater; and
controlling the operation of the columnar recoater by referring to the recoating pattern table, when the structure of the columnar recoater and the recoating amount are input.

11. A computer program for causing a computer to execute a method of controlling a material supply apparatus, the material supply apparatus including
a hopper that stores a material used for shaping a three-dimensional laminating and shaping object,
a columnar recoater having a rotational shaft, and
a driver that rotates the columnar recoater while moving the columnar recoater in a horizontal direction perpendicular to the rotational shaft,
wherein the columnar recoater has a plurality of grooves in a direction along the rotational shaft that are formed on an outer circumferential surface of the columnar recoater, and temporarily store the material supplied from the hopper,
the method comprising:
storing a recoating pattern table that associates a recoating amount of the material to be supplied by the columnar recoater with parameters for setting arrangement structure and an operation of the columnar recoater; and
controlling the operation of the columnar recoater by referring to the recoating pattern table, when the structure of the columnar recoater and the recoating amount are input.
